# FASCICULE DE BREVET EUROPEEN

(11) **EP 3 249 343 B1**
(45) Date de publication et mention de la délivrance du brevet: **12.12.2018**
(21) Numéro de dépôt: 17172905.6
(22) Date de dépôt: 24.05.2017
(51) Int. Cl.: F41A 23/18, A47B 81/00, B60R 7/14, B60R 7/12, F41A 23/02, F41A 23/00

(54) **MODULE DE MAINTIEN DE CANON D'ARME A FEU ET DISPOSITIF DE SUPPORT MODULAIRE POUR ARME A FEU COMPRENANT UN TEL MODULE AINSI QU'UN MODULE DE MAINTIEN DE CROSSE**
HALTEMODUL FÜR DEN LAUF EINER FEUERWAFFE, UND MODULARE HALTERUNGSVORRICHTUNG FÜR FEUERWAFFE, DIE EIN SOLCHES MODUL SOWIE EIN HALTEMODUL FÜR DEN GRIFF UMFASST
MODULE FOR HOLDING A FIREARM BARREL AND MODULAR SUPPORT DEVICE FOR A FIREARM COMPRISING SUCH A MODULE AS WELL AS A MODULE FOR HOLDING THE STOCK

(30) Priorité: 27.05.2016 FR 1600854
(43) Date de publication de la demande: 29.11.2017
(73) Titulaire: NEXTER Systems, 42328 Roanne Cedex (FR)
(72) Inventeur: PLASSE, Maxime, 18023 Bourges Cedex (FR); MARION, Lionel, 18023 Bourges Cedex (FR)
(74) Mandataire: Cabinet Chaillot

(56) Documents cités:
- CN-A- 104 153 657
- DE-C- 297 857
- DE-C1- 19 958 990
- FR-A1- 2 956 733
- US-A- 2 998 885
- US-A- 4 132 318
- US-A1- 2011 168 649
- US-A1- 2014 263 107
- US-A1- 2016 120 308

## Description

Le domaine technique de la présente invention est celui des dispositifs de support pour armes à feu, et la présente porte en particulier sur un dispositif de support modulaire pour arme à feu permettant de maintenir une arme à feu petit calibre de manière sécurisée, notamment à l'intérieur d'un véhicule, et sur un module de maintien de crosse et un module de maintien de canon pour un tel dispositif de support modulaire.

Un dispositif de support d'arme permet de stocker l'arme lorsque celle-ci n'est pas utilisée, d'une manière sûre en l'immobilisant.

A ce titre, on connaît de la demande de brevet américain US 2011/0168649 A1 un dispositif de support conforme au préambule de la revendication 1 et se présentant sous la forme d'un râtelier pour stocker une arme à feu verticalement. Ce dispositif comprend une base de support allongée destinée à être fixée à un mur, un module de maintien de crosse situé en partie inférieure de la base de support et comprenant un premier logement dans lequel est reçue la crosse, et un module de maintien de canon situé en partie supérieure de la base de support et comprenant un second logement dans lequel est reçu le canon. Les deux modules sont formés chacun par un bloc parallélépipédique, avec le premier logement débouchant sur la paroi supérieure et le second logement débouchant sur la paroi inférieure, les deux logements étant eux-mêmes parallélépipédiques. La paroi inférieure du premier logement est montée sur ressorts de façon à s'enfoncer lorsque l'utilisateur introduit la crosse de l'arme dans ledit logement et appuie sur la paroi inférieure de façon à permettre au canon de l'arme d'être placé en regard du second logement, puis à remonter automatiquement lorsque l'utilisateur a relâché l'arme, introduisant ainsi l'extrémité du canon dans le second logement et exerçant une poussée pour faire appuyer le canon contre la paroi de fond du second logement.

On comprend aisément qu'une caractéristique importante d'un dispositif de support d'arme est la commodité et la rapidité avec laquelle une arme peut être placée dans le dispositif et peut être retirée de celui-ci.

Le dispositif de l'état antérieur de la technique décrit ci-dessus présente l'inconvénient de requérir de l'utilisateur, lors de la mise en place ou du retrait de l'arme, qu'il appuie sur la paroi inférieure du premier logement, puis de faire pivoter l'arme une fois que le canon a été dégagé du second logement. L'on comprend que cet appui ne se fait pas naturellement dans le mouvement de l'utilisateur réalisant le geste de mise en place ou de retrait, et donc que la mise en place et le retrait ne sont pas rapides et commodes.

De plus, afin d'assurer un maintien latéral correct de l'arme, il est nécessaire que la largeur au moins du premier logement soit très proche de l'épaisseur de la crosse, de sorte que le module de maintien de crosse de ce dispositif conviendra pour une arme donnée, mais non pour une arme ayant des dimensions de crosse différentes. Cela oblige également l'utilisateur à prendre plus de temps pour positionner la crosse bien en face du premier logement avant de l'engager dans ce dernier, ce qui affecte encore la rapidité de la mise en place de l'arme.

En outre, bien qu'il puisse effectivement recevoir des armes de différentes hauteurs, la plage de hauteurs admissibles est limitée par la course de déplacement de la plaque inférieure du premier logement, course qui, si elle est trop importante, signifie que, dans le cas d'une arme ayant la hauteur admissible maximale, la réaction des ressorts lorsque l'utilisateur aura relâché l'arme sera grande et le déplacement de l'arme pourra être brusque et soudain, et une manipulation brusque et soudaine n'est habituellement pas souhaitable pour une arme à feu.

Le but de l'invention est notamment de pallier à ces inconvénients en proposant un dispositif de support pour arme à feu sur lequel différents types d'armes à feu peuvent être mis en place et retirés de manière rapide, avec un geste simple et naturel.

DE 297 857 C décrit un râtelier à fusils comprenant, en partie basse, plusieurs rainures à parois verticales destinées chacune à recevoir l'extrémité de la crosse d'un fusil, et, en partie haute, des moyens de maintien de canon conformément au préambule de la revendication 1, en particulier des moyens comprenant une barre transversale montée basculante autour d'un axe qui est horizontal et en avant des canons des fusils lorsque ces derniers sont en position rangée, de sorte que la barre pivotera tout d'abord vers l'arrière sous l'action du canon d'un fusil que l'on introduit dans le râtelier, avant de basculer vers l'avant par gravité une fois le fusil en position rangée, position dans laquelle la barre est en avant du canon.

La présente invention a donc pour objet un module de maintien de canon d'arme à feu formé par un corps destiné à être relié à une structure fixe, telle qu'une paroi intérieure d'un habitacle de véhicule, le corps du module de maintien de canon comportant un logement qui est défini par deux parois latérales verticales délimitant en partie inférieure une ouverture principale et est apte à recevoir la région d'extrémité libre du canon d'une arme à feu, les deux bords verticaux à une extrémité des deux parois latérales verticales du logement délimitant une ouverture d'entrée/sortie permettant l'entrée et la sortie de la région d'extrémité libre d'un canon d'arme respectivement dans et hors du logement, le module de maintien de canon comportant un mécanisme anti-projection comprenant un élément d'arrêt déplaçable entre une position de blocage, dans laquelle il s'étend en travers du logement de façon à former une butée s'opposant au retrait du canon par l'ouverture d'entrée/sortie, et une position de libération, dans laquelle il a été déplacé à l'opposé de l'ouverture principale du logement de façon à ne plus s'opposer au retrait du canon,
le module de maintien de canon étant caractérisé par le fait que le mécanisme anti-projection comprend en outre un élément d'actionnement actionnable pour déplacer l'élément d'arrêt de la position de blocage à la position de libération, et par le fait que le logement est formé par un corps comprenant une paroi supérieure, une paroi inférieure opposée à la paroi supérieure, et au moins deux parois latérales extérieures reliant les parois supérieure et inférieure et délimitant la périphérie du corps, périphérie dans laquelle débouche le logement au niveau de l'ouverture d'entrée/sortie, le logement ayant une forme de rainure délimitée par les deux parois latérales verticales, une paroi d'extrémité opposée à l'ouverture d'entrée/sortie, et une paroi de fond reliant les deux parois latérales verticales et la paroi d'extrémité.

De préférence, la distance entre les deux parois latérales verticales du logement diminue à mesure que l'on s'écarte de l'ouverture d'entrée/sortie, les deux parois latérales verticales étant notamment composées chacune d'une première région en pente partant de l'ouverture d'entrée/sortie, d'une première région plane qui part de la première région en pente, est en regard de la première région plane de l'autre paroi latérale verticale et est à une distance constante de celle-ci, d'une seconde région en pente qui part de la première région plane, et d'une seconde région plane qui part de la seconde région en pente, est en regard de la seconde région plane de l'autre paroi latérale verticale et est à une distance constante de celle-ci.

De préférence, l'élément d'actionnement présente une face de contact inclinée ou verticale s'étendant en travers du logement et contre laquelle vient en contact le canon de l'arme à feu lorsqu'il est introduit dans le logement, l'élément d'actionnement étant déplaçable par suite dudit contact du canon contre la face de contact et agencé pour que ce déplacement de l'élément d'actionnement, sous l'action du canon, déplace l'élément d'arrêt de la position de blocage à la position de libération.

De préférence, l'élément d'arrêt et l'élément d'actionnement sont d'un seul tenant et se présentent sous la forme d'une gâchette montée pivotante autour d'un axe de pivotement perpendiculaire aux parois latérales du logement, l'élément d'arrêt consistant en un cran ménagé dans la région d'une première extrémité de la gâchette, le reste de la gâchette formant l'élément d'actionnement avec la seconde région d'extrémité de gâchette s'étendant hors du logement, de telle sorte qu'un appui sur la seconde extrémité en direction de l'ouverture principale du second fait pivoter la première extrémité dans la direction opposée.

De préférence, le mécanisme anti-projection du module de maintien de canon comprend des moyens de sollicitation élastique de l'élément d'arrêt vers la position de blocage, à l'encontre desquels l'élément d'actionnement est apte à déplacer l'élément d'arrêt vers la position de libération, les moyens de sollicitation élastique consistant notamment en un ressort à lame prenant, le cas échéant, à une extrémité de celui-ci appui sur le corps du module et à son autre extrémité appui sur la gâchette.

La présente invention a également pour objet un dispositif de support modulaire pour arme à feu du type comprenant une crosse et un canon, lequel dispositif comprend un module de maintien de crosse et un module de maintien de canon destinés à être disposés l'un au-dessous de l'autre, le module de maintien de crosse étant formé par un corps destiné à être relié à une structure fixe, telle qu'une paroi intérieure d'un habitacle de véhicule, le corps du module de maintien de crosse comprenant une paroi supérieure, une paroi inférieure opposée à la paroi supérieure, et au moins une paroi latérale reliant les parois supérieure et inférieure et délimitant la périphérie du corps, le corps du module de maintien de crosse comportant un logement qui débouche sur la paroi supérieure et est apte à recevoir la région d'extrémité libre de la crosse de l'arme à feu, le dispositif de support modulaire étant caractérisé par le fait que :
- le module de maintien de canon est tel que défini ci-dessus ; et
- le logement est oblong et défini par des parois inclinées en direction de la paroi supérieure du corps du module de maintien de crosse.

Les corps des modules selon la présente invention peuvent être destinés à être reliés directement ou indirectement à la structure fixe.

De préférence, les parois inclinées du logement du module de maintien de crosse comprennent deux parois longitudinales opposées l'une à l'autre et reliées à chaque extrémité par une paroi d'extrémité reliant deux parois latérales partant chacune d'une paroi longitudinale respective en formant un angle avec cette dernière, les deux parois d'extrémité étant incurvées.

De préférence, les parois inclinées définissant le logement du module de maintien de crosse présentent à différentes hauteurs des encoches d'appui de crosse, chaque encoche d'une paroi inclinée étant à la même hauteur qu'une encoche sur une autre paroi inclinée, avec, de préférence et le cas échéant, des encoches le long des deux parois longitudinales et des deux parois d'extrémité.

Le dispositif de support modulaire selon la présente invention peut comprendre en outre un module de réglage de hauteur comprenant une première partie solidaire du module de maintien de canon et une seconde partie solidaire du module de maintien de crosse, la première partie du module de réglage de hauteur étant reliées de manière mobile à la seconde partie de façon à permettre un déplacement du module de maintien de canon pour le rapprocher ou l'écarter du module de maintien de crosse, autorisant ainsi le réglage de la distance d'écartement entre le module de maintien de canon et le module de maintien de crosse.

Il pourrait être envisagé d'utiliser le module de maintien de crosse et le module de maintien de canon indépendamment l'un de l'autre.

Est ainsi divulgué par la présente un module de maintien de crosse d'arme à feu, formé par un corps destiné à être relié à une structure fixe, telle qu'une paroi intérieure d'un habitacle de véhicule, le corps comprenant une paroi supérieure, une paroi inférieure opposée à la paroi supérieure, et au moins une paroi latérale reliant les parois supérieure et inférieure et délimitant la périphérie du corps, le corps comportant un logement qui débouche sur la paroi supérieure et est apte à recevoir la région d'extrémité libre de la crosse de l'arme à feu, le module de maintien de crosse étant caractérisé par le fait que le logement est oblong et défini par des parois inclinées en direction de la paroi supérieure du logement.

Les caractéristiques techniques du module de maintien de crosse selon la présente invention décrites ci-dessus peuvent être combinées au module de maintien de canon tel que défini ci-dessus.

Pour mieux illustrer l'objet de la présente invention, on va en décrire ci-après des modes de réalisation particuliers avec référence au dessin annexé.

Sur ce dessin :
- la Figure 1 est une vue en perspective d'un dispositif de support pour arme à feu selon un premier mode de réalisation du module de réglage de hauteur, avec une arme à feu placée dans le dispositif ;
- la Figure 2 est une vue, analogue à la Figure 1, d'un dispositif de support pour arme à feu selon un second mode de réalisation du module de réglage de hauteur ;
- la Figure 3 est une vue en coupe verticale du dispositif de la Figure 1 ;
- la Figure 4 est une vue en perspective de dessus du module de maintien de crosse du dispositif de support selon la présente invention ;
- la Figure 5 est une vue en coupe transversale verticale du module de maintien de crosse de la Figure 4, prise au centre de ce dernier ;
- les Figures 6 et 7 sont des vues en coupe du module de maintien de canon du dispositif de support selon la présente invention, montrant le mécanisme anti-projection respectivement dans la position de blocage et dans la position de libération ;
- la Figure 8 est une vue de dessous du module de maintien de canon.

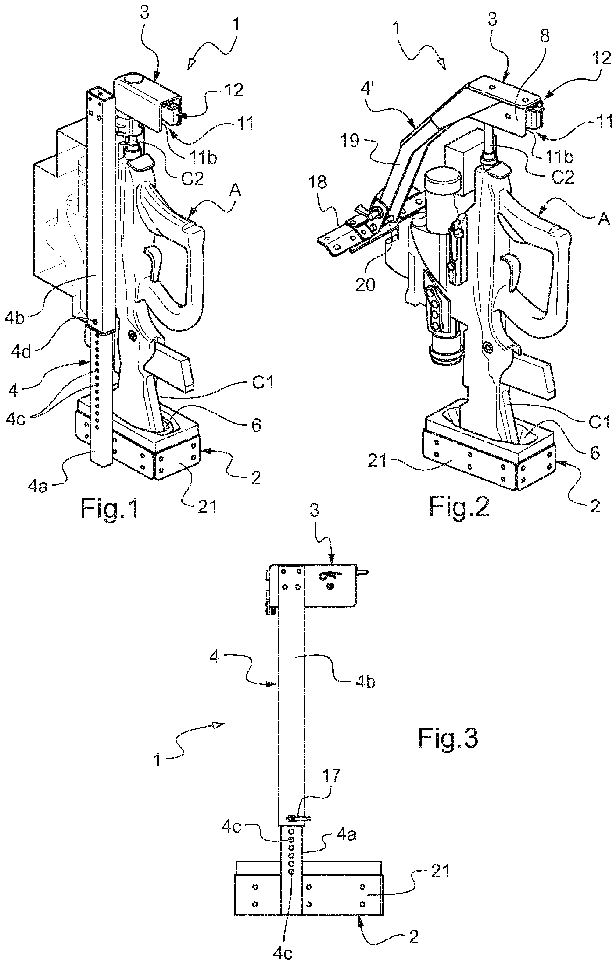

Si l'on se réfère aux Figures 1 à 3, on peut voir que le dispositif de support 1 selon la présente invention comprend au moins deux modules, à savoir un module de maintien de crosse 2, destiné à recevoir l'extrémité de la crosse C1 d'une arme à feu A, et un module de maintien de canon 3 destiné à recevoir l'extrémité du canon C2 de l'arme à feu A.

Selon un premier mode de réalisation, illustré sur les Figures 1 et 3, les modules 2 et 3 sont tous les deux couplés à un module de réglage de hauteur 4, tandis que selon un deuxième mode de réalisation, illustré sur la Figure 2, seul le module de maintien de canon 3 est couplé à un module de réglage de hauteur 4'. Les modules 4 et 4' seront décrits plus en détail ci-après.

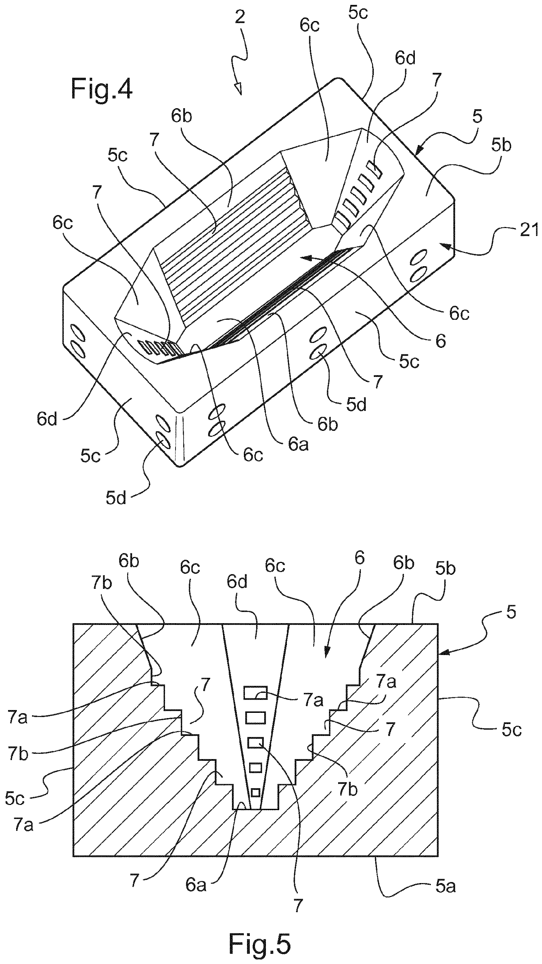

Si l'on se réfère aux Figures 4 et 5, on peut voir que le module de maintien de crosse 2 a un corps 5 se présentant sous la forme d'un bloc parallélépipédique ayant une paroi inférieure 5a, une paroi supérieure 5b et quatre parois latérales 5c. Le corps 5 est réalisé en une matière souple apte à protéger la crosse C1 vis-à-vis des chocs, par exemple lors de la conduite du véhicule. En particulier, la matière du corps 5 a une dureté de l'ordre de 50 à 60 Shore A. Ainsi, le module 2 a une faible masse.

La matière du corps pourrait être cependant d'une dureté supérieure. En effet, les crosses des armes comportent le plus souvent une partie en caoutchouc qui viendra en contact avec le corps.

Le corps 5 est disposé dans un sabot 21 en tôle d'acier auquel il est fixé par collage (voir Figures 1 à 3). Ce sabot rigide facilite la fixation du corps sur une structure fixe telle qu'une paroi intérieure du véhicule.

Un premier logement oblong 6 est réalisé dans le corps 5 et débouche sur la paroi supérieure 5b. Le premier logement 6 est défini par une paroi de fond 6a et des parois latérales inclinées qui convergent vers la paroi de fond 6a. En particulier, le premier logement 6 comprend huit parois latérales conformées de telle sorte que le contour du premier logement 6 dans le plan de la paroi supérieure 5b suit une forme générale d'ellipse. Plus précisément, il y a deux parois longitudinales rectangulaires 6b symétriques par rapport au plan perpendiculaire à la paroi de fond 6a et auquel appartient le grand axe de l'ellipse, quatre parois latérales trapézoïdales planes 6c, deux de part et d'autre de chaque paroi longitudinale 6b, et deux parois d'extrémité 6d opposées selon le grand axe de l'ellipse. Les parois d'extrémité 6d sont légèrement incurvées, en suivant un arc de cercle.

Ainsi, le premier logement 6 est évasé, de sorte que l'utilisateur n'a plus à prendre quelques secondes pour aligner correctement la crosse par rapport au module de maintien de crosse, comme cela est le cas dans l'art antérieur.

Le corps 5 a une longueur comprise entre 124 mm et 190 mm, une largeur comprise entre 25 mm et 57 mm et une hauteur d'environ 65 mm.

Les angles des parois inclinées 6b, 6c et 6d sont induits par les dimensions du corps. Ils sont de l'ordre de 40° à 60° par rapport à la verticale, et sont choisis de façon à faciliter l'introduction et l'extraction de la crosse de l'arme.

Des encoches 7 sont formées le long des parois longitudinales 6b, sur toute la longueur de ces dernières, et des parois d'extrémité 6d, sur une partie médiane de ces dernières. Ces encoches 7 sont formées à différentes hauteurs et présentent chacune une face horizontale 7a sur laquelle un bord d'une crosse peut venir appuyer et une face verticale 7b. A cet effet, chaque face horizontale 7a d'une encoche 7 appartient à un plan horizontal auquel appartient une face horizontale 7a d'une encoche 7 pour chaque autre paroi 6b et 6d. Dans l'exemple illustré sur les Figures 4 et 5, le premier logement 6 comporte cinq encoches 7 sur chacune des parois 6b et 6d, régulièrement espacées les unes des autres et réparties du voisinage de la paroi de fond 6a au voisinage de l'ouverture du premier logement 6.

Les encoches 7 étant ménagées dans des parois inclinées, les encoches 7 situées à une même hauteur définiront un plan horizontal d'appui, formé par les faces horizontales 7a, délimité par une bordure verticale formée par les faces verticales 7b, et donc une zone de réception susceptible de suivre au mieux le contour de l'extrémité d'une crosse d'une dimension donnée. A chaque hauteur des encoches 7 correspond donc une dimension de crosse donnée. Le module de maintien de crosse 2 permet donc de maintenir de manière stable différents types d'armes à feu ayant des dimensions de crosse différentes.

Cette capacité à recevoir différents types d'arme est accrue par l'utilisation d'une matière souple pour le corps 5, car cela autorise en plus une déformation du corps 5 dans le cas où les dimensions de la crosse diffèrent légèrement de la zone de réception définie par les encoches 7 qui se rapprochent le plus des dimensions de la crosse.

Des trous de fixation 5d, aptes à recevoir des organes de fixation, sont prévus sur les parois latérales 5c du corps 5 disposé dans son sabot 21, pour permettre de rendre le module de maintien de crosse 2 solidaire d'une structure fixe, telle qu'une paroi intérieure de véhicule.

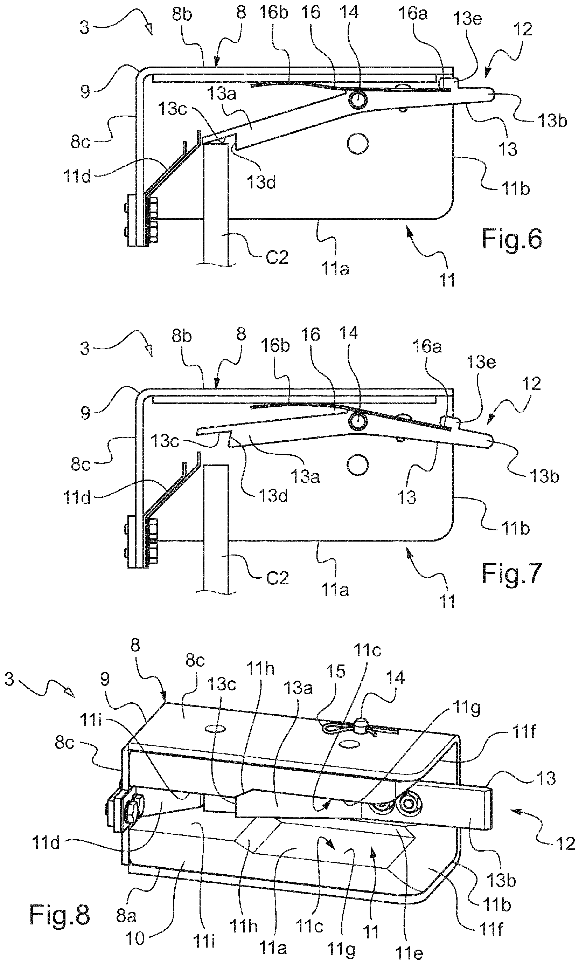

Si l'on se réfère maintenant aux Figures 6 à 8, on peut voir que le module de maintien de canon 3 a un corps 8 inscrit dans un parallélépipède rectangle et est formé par une tôle 9 pliée de façon à former une forme de U fermée à une extrémité, à l'intérieur duquel est placé un bloc de matière 10 recouvrant l'intérieur de la tôle 9, de sorte que le corps 8 comprend une paroi inférieure 8a, une paroi supérieure 8b et trois parois latérales 8c. Le bloc de matière 10 est réalisé en une matière souple déformable, de sorte qu'il peut protéger le canon C2 d'une arme à feu A vis-à-vis des chocs tout en s'adaptant à différents diamètres de canon. En particulier, la matière du module de maintien de canon 3 a une dureté de l'ordre de 30 Shore A. La matière du module de maintien pourrait être cependant d'une dureté supérieure ou inférieure.

Le corps 8 présente un second logement 11, prévu dans le bloc de matière 10, qui débouche sur la paroi inférieure 8a et sur l'extrémité du U opposée à l'extrémité fermée, en formant ainsi respectivement une ouverture principale 11a et une ouverture d'entrée/sortie 11b qui communiquent l'une avec l'autre. En d'autres termes, le second logement 11 se présente sous la forme d'une rainure délimitée par deux parois latérales verticales 11c, une paroi d'extrémité 11d opposée à l'ouverture d'entrée/sortie 11b, et une paroi de fond 11e. Dans l'exemple représenté, la paroi d'extrémité 11d est formée par une tôle pliée en un Z ouvert, l'aile inférieure du Z étant fixée à la tôle 9 par des vis et l'aile supérieure s'étendant à la verticale à l'intérieur du second logement 11.

La largeur de la rainure diminue par paliers à mesure que l'on s'approche de la paroi d'extrémité 11d. Chaque paroi latérale verticale 11c est composée d'une première région en pente 11f partant de l'ouverture d'entrée/sortie 11b, d'une première région plane 11g qui part de la première région en pente 11f et s'étend légèrement plus loin que la partie médiane de la rainure, d'une seconde région en pente 11h qui part de la première région plane 11g, et d'une seconde région plane 11i qui part de la seconde région en pente 11g. Les premières régions planes 11g définissent entre elles une première zone de la rainure qui a une plus grande largeur qu'une seconde zone définie entre les secondes régions planes 11i.

Des trous de fixation, aptes à recevoir des organes de fixation, sont prévus sur les parois latérales 8c du corps 8, pour permettre de relier le module de maintien de canon 3 à une structure fixe ou à un module de réglage en hauteur 4 ou 4'.

Le corps 8 a une longueur comprise entre 94 mm et 126 mm, une largeur comprise entre 34 mm et 52 mm et une hauteur comprise entre 63 mm et 86 mm. Le second logement 11 a une hauteur d'environ 34 mm et une longueur d'environ 120 mm. La largeur desdites première et seconde zones de la rainure sont respectivement de 15 mm et 52 mm. De telles dimensions permettent d'avoir un module de maintien de canon 3 adapté a des diamètres de canon de 17 mm à 25 mm.

Le module de maintien de canon 3 comporte un mécanisme anti-projection 12 agencé dans le second logement 11 et comprend une gâchette 13 montée pivotante autour d'un axe de pivotement perpendiculaire aux parois latérales verticales 11c du second logement 11.

La gâchette 13 consiste en une bande allongée de métal en forme de V très ouvert, dont la majeure partie constitue une première partie formant élément d'arrêt 13a, qui correspond à une première branche du V et à une partie de la seconde branche du V, la région d'extrémité de la seconde branche constituant une seconde partie formant élément d'actionnement 13b. L'élément d'arrêt 13a consiste en particulier en un cran 13c formé à l'extrémité libre de la gâchette 13, le cran 13c présentant une face d'arrêt 13d dirigée vers la paroi d'extrémité 11d du second logement 11, en particulier en regard de l'aile supérieure de la tôle formant la paroi d'extrémité 10d.

La gâchette 13 est reçue dans un évidement allongé ménagé dans la paroi de fond 11e du second logement 11, avec la concavité du V dirigée vers l'ouverture principale 11a, et est montée de façon pivotante par un pivot 14 dont l'axe est perpendiculaire aux parois 10c du second logement 11, le pivot 14 passant à travers un alésage lisse ménagé dans la gâchette 13, au niveau du sommet du V, et à travers des trous correspondants ménagés dans le corps 8 pour faire saillie de chaque paroi latérale 8c, où il est arrêté en translation par une goupille 15. L'élément d'actionnement 13b s'étend hors du logement 11.

Un ressort à lame 16 est placé entre le côté supérieur de la gâchette 13 et le corps 8. Une extrémité 16a du ressort à lame 16 étant reçue dans une fente formée dans une saillie 13e prévue sur le côté supérieur de la gâchette 13, dans la partie formant élément d'actionnement 13b, et le ressort à lame 16 est fixé par boulonnage à ladite partie formant élément d'actionnement 13b. Le profil du ressort à lame 16 présente une inflexion au niveau du pivot 14 et son autre région d'extrémité 16b prend appui contre le corps 8.

Le mécanisme anti-projection 12, et en particulier la gâchette 13, est déplaçable entre une position de blocage et une position de libération.

On a représenté sur la Figure 6 la gâchette 13 en position de blocage du canon C2 d'une arme à feu. Dans cette position, la face d'arrêt 13d du cran 13c est en regard de la paroi d'extrémité 11d souple, entre lesquelles l'extrémité libre du canon C2 se trouve. Le cran 13c s'oppose ainsi au retrait du canon C2 et la gâchette 13 est maintenue dans cette position par l'action du ressort à lame 16 qui sollicite la gâchette 13 vers ladite position de blocage. En d'autres termes, le canon C2 est maintenu en position de manière sûre.

Lorsque l'utilisateur souhaite retirer le canon C2, il lui suffit d'appuyer vers le bas sur l'élément d'actionnement 13b pour faire pivoter vers le haut l'élément d'actionnement 13a de telle sorte que le cran 13c n'est plus en regard du canon C2, comme représenté sur la Figure 7. Après le retrait du canon C2, le ressort à lame 16 ramène la gâchette 13 dans la position de blocage, qui constitue ainsi la position au repos du mécanisme anti-projection 12.

Lorsque l'utilisateur souhaite mettre en place un canon C2 d'arme à feu dans le module de maintien de canon 3, il lui suffit d'introduire l'extrémité libre du canon C2 dans le logement 11 en passant par l'ouverture d'entrée/sortie 11b, et de poursuivre le mouvement d'introduction jusqu'à ce que le canon C2 vienne en contact avec la partie formant élément d'actionnement 13a, qui est inclinée, et la poursuite du mouvement d'introduction amènera la partie formant élément d'actionnement 13a à pivoter vers le haut, à l'encontre de l'action du ressort à lame 16. Une fois que le canon C2 est arrivé à proximité de la paroi d'extrémité 11d, il n'appuie plus sur la partie formant élément d'actionnement 13a, du fait de la présence du cran 13c, et le ressort à lame 16 ramène alors la gâchette 13 en position de blocage. La souplesse de la paroi d'extrémité 11d permet de pousser aisément le canon C2 au-delà de sa position de maintien, ce qui facilite le retour du cran 13c dans la position de blocage. L'élasticité de la paroi d'extrémité 11d repousse le canon contre le cran 13c de la gâchette 13.

On peut souligner ici que l'introduction du canon C2 dans le second logement 11 et son mouvement à l'intérieur de ce dernier jusqu'à la position appropriée sont guidés par la diminution progressive de la largeur de la rainure que forme le second logement 11.

En résumé, lorsque l'utilisateur souhaite ranger une arme à feu dans le dispositif de support 1 selon la présente invention, il lui suffit d'abord d'engager la crosse C1 dans le premier logement 6 du module de maintien de crosse 2, en inclinant légèrement l'arme à feu. Cet engagement est facilité par le fait que le premier logement 6 est évasé, et en particulier à ses extrémités. Ensuite, l'utilisateur fait pivoter l'arme à feu A pour la ramener à la verticale, introduisant ainsi le canon C2 dans le second logement 11 pour obtenir son blocage automatique par le mécanisme anti-projection 12 de la manière décrite ci-dessus. Simultanément à ce pivotement, la crosse C1 viendra naturellement se loger dans les encoches 7 correspondantes.

On souligne ici que l'appui que doit exercer l'utilisateur lors de la mise en place de l'arme, pour déplacer la gâchette 13 de la position de blocage à la position de libération, se fait au cours et dans la direction du mouvement de pivotement de l'arme à feu A, et donc avec un geste naturel.

Lorsque l'utilisateur souhaite récupérer l'arme à feu A, il lui suffit d'appuyer d'une main sur la gâchette 13 pour faire passer le mécanisme anti-projection 12 dans la position de libération, puis, de l'autre main, de faire pivoter l'arme à feu A jusqu'à ce que le canon C2 sorte du second logement 11 et enfin de faire sortir la crosse C1 du premier logement 6. Là encore, le pivotement de l'arme à feu A alors que la crosse C1 est encore reçue dans le premier logement 6 se fait sans difficulté du fait de l'évasement du premier logement 6 à ses extrémités.

On constate donc que le dispositif de support modulaire 1 selon la présente invention permet une mise en place et un retrait d'une arme à feu d'une manière rapide, avec un geste simple et naturel.

Le dispositif de support modulaire 1, du fait de l'agencement des premier et second logements 6 et 11, peut recevoir différents types d'armes à feu, ayant en particulier différentes dimensions à la crosse et au canon.

Le dispositif de support modulaire 1 permet également de s'adapter à la hauteur de l'arme à feu, grâce aux modules de réglage de hauteur 4 ou 4'.

Dans le premier mode de réalisation représenté sur les Figures 1 et 3, le module de réglage de hauteur 4 comprend deux tubes télescopiques (ici à section rectangulaire), dont un tube inférieur 4a monté coulissant à l'intérieur d'un tube supérieur 4b. La région d'extrémité inférieure du tube inférieur 4a est rendue solidaire du module de maintien de crosse 2 tandis que la région d'extrémité supérieure du tube supérieur 4b est rendue solidaire du module de maintien de canon 3. Le tube inférieur 4a comporte une pluralité de trous traversants 4c répartis sur la longueur du tube inférieur 4a et aptes à correspondre avec au moins un trou traversant 4d du tube supérieur 4b. Ainsi, la distance entre les modules 2, 3 de maintien de crosse et de canon est réglée par coulissement des tubes 4a, 4b l'un par rapport à l'autre jusqu'à ce que le module de réglage de hauteur 4 ait la longueur souhaitée. Les tubes 4a et 4b sont alors bloqués l'un par rapport à l'autre par une goupille 17 passant à travers les trous 4c, 4d. La goupille 17 peut être retirée d'un trou pour modifier le réglage de hauteur du module 4.

Dans le second mode de réalisation représenté sur la Figure 2, le module de réglage de hauteur 4' comprend, d'une part, une base 18 présentant des moyens de fixation, tels que des alésages pour le passage d'organes de fixation, pour une fixation à une structure fixe, telle qu'une paroi intérieure d'un véhicule, et, d'autre part, un bras 19 dont une extrémité est reliée à pivotement autour d'un pivot horizontal 20 et dont l'autre extrémité est rendue solidaire du corps 8 du module de maintien de canon 3, ce dernier étant ainsi tenu en porte-à-faux. Le module de maintien de crosse 2 est fixé à une structure fixe, par exemple le plancher ou ladite paroi de véhicule, à la verticale du module de maintien de canon 3. En ce sens, on peut considérer que le module de maintien de crosse 2 et la base 18 sont solidaires, de manière indirecte. La hauteur entre les modules 2, 3 de maintien de crosse et de canon est réglée par déplacement en hauteur du module de maintien de canon 3 par simple pivotement du bras 19.

Ainsi, le dispositif de support modulaire 1 pour arme à feu selon la présente invention est bien apte à s'adapter à des armes différentes, telles qu'un fusil d'assaut de type FAMAS (marque déposée), une carabine de précision de type FRF2, un fusil de précision à verrou de type PGM HECATE II (marque déposée) ou autres, c'est-à-dire à des armes de différents diamètres de canon, de différentes longueurs, et de différentes formes de crosse.

Il est bien entendu que les modes de réalisation particuliers qui viennent d'être décrits ont été donnés à titre indicatif et non limitatif et que des modifications peuvent être apportées sans que l'on s'écarte pour autant du cadre de la présente invention.

## Revendications

1. Module de maintien de canon (3) d'arme à feu (A) formé par un corps (8) destiné à être relié à une structure fixe, telle qu'une paroi intérieure d'un habitacle de véhicule, le corps (8) du module de maintien de canon (3) comportant un logement (11) qui est défini par deux parois latérales verticales (11c) délimitant en partie inférieure une ouverture principale (11a) et est apte à recevoir la région d'extrémité libre du canon (C2) d'une arme à feu (A), les deux bords verticaux à une extrémité des deux parois latérales verticales (11c) du logement (11) délimitant une ouverture d'entrée/sortie (11b) permettant l'entrée et la sortie de la région d'extrémité libre d'un canon (C2) d'arme respectivement dans et hors du logement (11), le module de maintien de canon (3) comportant un mécanisme anti-projection (12) comprenant un élément d'arrêt (13a) déplaçable entre une position de blocage, dans laquelle il s'étend en travers du logement (11) de façon à former une butée s'opposant au retrait du canon (C2) par l'ouverture d'entrée/sortie (11b), et une position de libération, dans laquelle il a été déplacé à l'opposé de l'ouverture principale (11a) du logement (11) de façon à ne plus s'opposer au retrait du canon (C2),
le module de maintien de canon (3) étant **caractérisé par le fait que** le mécanisme anti-projection (12) comprend en outre un élément d'actionnement (13b) actionnable pour déplacer l'élément d'arrêt (13a) de la position de blocage à la position de libération, et **par le fait que** le logement (11) est formé par un corps (8) comprenant une paroi supérieure (8b), une paroi inférieure (8a) opposée à la paroi supérieure (8b), et au moins deux parois latérales extérieures (8c) reliant les parois supérieure (8b) et inférieure (8a) et délimitant la périphérie du corps (8), périphérie dans laquelle débouche le logement (11) au niveau de l'ouverture d'entrée/sortie (11b), le logement (11) ayant une forme de rainure délimitée par les deux parois latérales verticales (11c), une paroi d'extrémité (11d) opposée à l'ouverture d'entrée/sortie (11b), et une paroi de fond (11e) reliant les deux parois latérales verticales (11c) et la paroi d'extrémité (11d).

2. Module de maintien de canon (3) selon la revendication 1, **caractérisé par le fait que** la distance entre les deux parois latérales verticales (11c) du logement (11) diminue à mesure que l'on s'écarte de l'ouverture d'entrée/sortie (11b), les deux parois latérales verticales (11c) étant notamment composées chacune d'une première région en pente (11f) partant de l'ouverture d'entrée/sortie (11b), d'une première région plane (11g) qui part de la première région en pente (11f), est en regard de la première région plane (11g) de l'autre paroi latérale verticale (11c) et est à une distance constante de celle-ci, d'une seconde région en pente (11h) qui part de la première région plane (11g), et d'une seconde région plane (11i) qui part de la seconde région en pente (11h), est en regard de la seconde région plane (11i) de l'autre paroi latérale verticale (11c) et est à une distance constante de celle-ci.

3. Module de maintien de canon (3) selon l'une des revendications 1 et 2, **caractérisé par le fait que** l'élément d'actionnement (13b) présente une face de contact inclinée ou verticale s'étendant en travers du logement (11) et contre laquelle vient en contact le canon (C2) de l'arme à feu (A) lorsqu'il est introduit dans le logement (11), l'élément d'actionnement (13b) étant déplaçable par suite dudit contact du canon (C2) contre la face de contact et agencé pour que ce déplacement de l'élément d'actionnement (13b), sous l'action du canon (C2), déplace l'élément d'arrêt (13a) de la position de blocage à la position de libération.

4. Module de maintien de canon (3) selon l'une des revendications 1 à 3, **caractérisé par le fait que** l'élément d'arrêt (13a) et l'élément d'actionnement (13b) sont d'un seul tenant et se présentent sous la forme d'une gâchette (13) montée pivotante autour d'un axe de pivotement perpendiculaire aux parois latérales (11c) du logement (11), l'élément d'arrêt (13a) consistant en un cran (13c) ménagé dans la région d'une première extrémité de la gâchette (13), le reste de la gâchette (13) formant l'élément d'actionnement (13b) avec la seconde région d'extrémité de gâchette (13) s'étendant hors du logement (11), de telle sorte qu'un appui sur la seconde extrémité en direction de l'ouverture principale (11a) du logement (11) fait pivoter la première extrémité dans la direction opposée.

5. Module de maintien de canon (3) selon l'une des revendications 1 à 4, **caractérisé par le fait que** le mécanisme anti-projection (12) du module de maintien de canon (3) comprend des moyens de sollicitation élastique (16) de l'élément d'arrêt (13a) vers la position de blocage, à l'encontre desquels l'élément d'actionnement (13b) est apte à déplacer l'élément d'arrêt (13a) vers la position de libération, les moyens de sollicitation élastique (16) consistant notamment en un ressort à lame (16) prenant, le cas échéant, à une extrémité de celui-ci appui sur le corps (8) du module (3) et à son autre extrémité appui sur la gâchette (13).

6. Dispositif de support modulaire (1) pour arme à feu (A) du type comprenant une crosse (C1) et un canon (C2), lequel dispositif (1) comprend un module de maintien de crosse (2) et un module de maintien de canon (3) destinés à être disposés l'un au-dessous de l'autre, le module de maintien de crosse (2) étant formé par un corps (5) destiné à être relié à une structure fixe, telle qu'une paroi intérieure d'un habitacle de véhicule, le corps (5) du module de maintien de crosse (2) comprenant une paroi supérieure (5b), une paroi inférieure (5a) opposée à la paroi supérieure (5b), et au moins une paroi latérale (5c) reliant les parois supérieure (5b) et inférieure (5a) et délimitant la périphérie du corps (5), le corps (5) du module de maintien de crosse (2) comportant un logement (6) qui débouche sur la paroi supérieure (5b) et est apte à recevoir la région d'extrémité libre de la crosse (C1) de l'arme à feu (A), le dispositif de support modulaire (1) étant **caractérisé par le fait que** :
- le module de maintien de canon (3) est tel que défini à l'une quelconque des revendications 1 à 5 ; et
- le logement (6) est oblong et défini par des parois (6b, 6c, 6d) inclinées en direction de la paroi supérieure (5b) du corps (5) du module de maintien de crosse (2).

7. Dispositif de support modulaire (1) selon la revendication 6, **caractérisé par le fait que** les parois inclinées (6b, 6c, 6d) du logement (6) comprennent deux parois longitudinales (6b) opposées l'une à l'autre et reliées à chaque extrémité par une paroi d'extrémité (6d) reliant deux parois latérales (6c) partant chacune d'une paroi longitudinale (6b) respective en formant un angle avec cette dernière, les deux parois d'extrémité (6d) étant incurvées.

8. Dispositif de support modulaire (1) selon l'une des revendications 6 et 7, **caractérisé par le fait que** les parois inclinées (6b, 6d) définissant le logement (6) présentent à différentes hauteurs des encoches (7) d'appui de crosse, chaque encoche (7) d'une paroi inclinée (6b, 6c) étant à la même hauteur qu'une encoche (7) sur une autre paroi inclinée (6b, 6c), avec, de préférence et le cas échéant, des encoches (7) le long des deux parois longitudinales (6b) et des deux parois d'extrémité (6d).

9. Dispositif de support modulaire (1) selon l'une des revendications 6 à 8, **caractérisé par le fait qu'**il comprend en outre un module de réglage de hauteur (4 ; 4') comprenant une première partie (4b ; 19) solidaire du module de maintien de canon (3) et une seconde partie (4a ; 18) solidaire du module de maintien de crosse (2), la première partie (4b ; 19) du module de réglage de hauteur (4 ; 4') étant reliée de manière mobile à la seconde partie (4a ; 18) de façon à permettre un déplacement du module de maintien de canon (3) pour le rapprocher ou l'écarter du module de maintien de crosse (2), autorisant ainsi le réglage de la distance d'écartement entre le module de maintien de canon (2) et le module de maintien de crosse (3) .

## Patentansprüche

1. Haltemodul für den Lauf (3) einer Feuerwaffe (A), gebildet durch einen Körper (8), der dazu bestimmt ist, mit einer festen Struktur verbunden zu sein, wie einer Innenwand eines Fahrgastraums, wobei der Körper (8) des Haltemoduls für den Lauf (3) eine Aufnahme (11) umfasst, die durch zwei senkrechte Seitenwände (11c) definiert ist, die im unteren Teil eine Hauptöffnung (11a) abgrenzen, und in der Lage ist, den freien Endbereich des Laufs (C2) einer Feuerwaffe (A) aufzunehmen, wobei die beiden senkrechten Ränder an einem Ende der beiden senkrechten Seitenwände (11c) der Aufnahme (11) eine Eintritts-/Austritts-Öffnung (11b) abgrenzen, die den Eintritt und den Austritt des freien Endbereichs eines Laufs (C2) einer Waffe in die bzw. aus der Aufnahme (11) ermöglicht, wobei das Haltemodul für den Lauf (3) einen Fangmechanismus (12) umfasst, der ein Haltelement (13a) umfasst, das zwischen einer Sperrposition, in der es sich quer durch die Aufnahme (11) erstreckt, um einen Anschlag zu bilden, und so dem Rückzug des Laufs (C2) durch die Eintritts-/Austritts-Öffnung (11b) entgegensteht, und einer Freigabeposition verschiebbar ist, in der es, anders als die Hauptöffnung (11a) der Aufnahme (11), verschoben wurde, um nicht mehr dem Rückzug des Laufs (C2) entgegenzustehen,
wobei das Haltemodul für den Lauf (3) **dadurch gekennzeichnet ist, dass** der Fangmechanismus (12) außerdem ein Antriebselement (13b) umfasst, das zum Verschieben des Halteelements (13a) aus der Sperrposition in die Freigabeposition betätigbar ist, sowie dadurch, dass die Aufnahme (11) durch einen Körper (8) gebildet ist, der eine obere Wand umfasst, (8b), eine untere Wand (8a) gegenüber der oberen Wand (8b) und mindestens zwei äußere Seitenwände (8c), die die obere (8b) und die untere Wand (8a) verbinden und den Umfang des Körpers (8) abgrenzen, wobei in den Umfang die Aufnahme (11) auf Höhe der Eintritts-/AustrittsÖffnung (11b) mündet, wobei die Aufnahme (11) die Form einer Nut hat, begrenzt durch die beiden senkrechten Seitenwände (11c), eine Endwand (11d) gegenüber der Eintritts-/Austritts-Öffnung (11b) und eine Bodenwand (11e), die die beiden senkrechten Seitenwände (11c) und die Endwand (11d) verbindet.

2. Haltemodul für einen Lauf (3) nach Anspruch 1, **gekennzeichnet dadurch, dass** der Abstand zwischen den beiden senkrechten Seitenwänden (11c) der Aufnahme (11) je mehr abnimmt, desto mehr man sich von der Eintritts-/Austritts-Öffnung (11b) entfernt, die beiden senkrechten Seitenwände (11c) bestehen vor allem jeweils aus einem ersten abschüssigen Bereich (11f), der von der Eintritts-/Austritts-Öffnung (11b) ausgeht, einem ersten ebenen Bereich (11g), der von dem ersten abschüssigen Bereich (11f) ausgeht, gegenüber dem ersten ebenen Bereich (11g) der anderen senkrechten Seitenwand (11c) liegt und eine konstanten Abstand von letzterem einhält, einem zweiten abschüssigen Bereich (11h), der vom ersten ebenen Bereich ausgeht (11g), und einem zweiten ebenen Bereich (11i), der vom zweiten abschüssigen Bereich ausgeht (11h), gegenüber dem zweiten ebenen Bereich (11i) der anderen senkrechten Seitenwand (11c) liegt und einen konstanten Abstand von letzterem einhält.

3. Haltemodul für einen Lauf (3) nach einem der Ansprüche 1 und 2, **gekennzeichnet dadurch, dass** das Antriebselement (13b) eine geneigte oder senkrechte Kontaktseite aufweist, die sich durch die Aufnahme (11) erstreckt und gegen die der Lauf (C2) der Feuerwaffe (A) in Kontakt kommt, wenn er in die Aufnahme (11) eingeführt wird, das Antriebselement (13b) ist infolge des genannten Kontakts des Laufs (C2) gegen die Kontaktseite verschiebbar und ist angeordnet, damit diese Verschiebung des Antriebselements (13b), unter der Einwirkung des Laufs (C2), das Halteelement (13a) aus der Sperrposition in die Freigabeposition verschiebt.

4. Haltemodul für einen Lauf (3) nach einem der Ansprüche 1 bis 3, **gekennzeichnet dadurch, dass** das Halteelement (13a) und das Antriebselement (13b) einstückig sind und in Form eines Abzugs (13), der drehbar um eine Drehachse senkrecht zu den Seitenwänden (11c) der Aufnahme (11) montiert ist, wobei das Halteelement (13a) aus einer Rast (13c) in dem Bereich eines ersten Endes des Abzugs (13) besteht, wobei der Rest des Abzugs (13) das Antriebselement (13b) mit dem zweiten Abzugsendbereich (13) bildet, der sich außerhalb der Aufnahme (11) erstreckt, so dass ein Drücken auf das zweite Ende in Richtung auf die Hauptöffnung (11a) der Aufnahme (11) das erste Ende in die entgegengesetzte Richtung dreht.

5. Haltemodul für einen Lauf (3) nach einem der Ansprüche 1 bis 4, **gekennzeichnet dadurch, dass** der Fangmechanismus (12) des Haltemoduls für einen Lauf (3) Vorspannmittel (16) für das Halteelement (13a) zur Sperrposition hin umfasst, gegen die das Antriebselement (13b) das Halteelement (13a) zur Freigabeposition hin verschieben kann, wobei die Vorspannmittel (16) vor allem aus einer Blattfeder (16) bestehen, die sich gegebenenfalls an einem Ende von dieser auf den Körper (8) des Moduls (3) stützen und an ihrem anderen Ende auf den Abzug (13).

6. Modulare Stützvorrichtung (1) für Feuerwaffe (A) mit einem Gewehrkolben (C1) und einem Lauf (C2), wobei die Vorrichtung (1) ein Gewehrkolbenhaltemodul (2) umfasst und ein Haltemodul für einen Lauf (3), die untereinander angeordnet werden, wobei das Gewehrkolbenhaltemodul (2) durch einen Körper (5) gebildet ist, der dazu bestimmt ist, mit einer festen Struktur verbunden zu sein, wie die Innenwand eines Fahrgastraums, wobei der Körper (5) des Gewehrkolbenhaltemoduls (2) eine obere Wand umfasst (5b), eine untere Wand (5a) gegenüber der oberen Wand (5b) und mindestens eine Seitenwand (5c), die die obere (5b) und die untere Wand (5a) verbindet und den Umfang des Körpers (5) abgrenzt, wobei der Körper (5) des Gewehrkolbenhaltemoduls (2) eine Aufnahme (6) umfasst, die auf die obere Wand (5b) mündet und in der Lage ist, den freien Endbereich des Gewehrkolbens (C1) der Feuerwaffe (A) aufzunehmen, wobei die modulare Stützvorrichtung (1) **dadurch gekennzeichnet ist, dass**:
- das Haltemodul für einen Lauf (3) so ist, wie in einem beliebigen der Ansprüche 1 bis 5 definiert; und
- die Aufnahme (6) länglich und durch Wände (6b, 6c, 6d) definiert ist, die in Richtung auf die obere Wand (5b) des Körpers (5) des Gewehrkolbenhaltemoduls (2) geneigt sind.

7. Modulare Stützvorrichtung (1) nach Anspruch 6, **gekennzeichnet dadurch, dass** die geneigten Wände (6b, 6c, 6d) der Aufnahme (6) zwei Längswände (6b) umfassen, die einander gegenüberliegen und mit jedem Ende durch eine Endwand (6d) verbunden sind, die zwei Seitenwände (6c) verbinden, die jeweils von einer betreffenden Längswand (6b) ausgehen, wobei sie einen Winkel mit letzterer bilden, wobei die beiden Endwände (6d) gebogen sind.

8. Modulare Stützvorrichtung (1) nach einem der Ansprüche 6 und 7, **gekennzeichnet dadurch, dass** die geneigten Wände (6b, 6d), die die Aufnahme (6) definiert, auf verschiedenen Höhen Kerben (7) als Gewehrkolbenstützen aufweisen, jede Kerbe (7) einer geneigten Wand (6b, 6c) ist auf derselben Höhe wie eine Kerbe (7) auf einer anderen geneigten Wand (6b, 6c), mit, vorzugsweise und gegebenenfalls, Kerben (7) entlang der zwei Längswände (6b) und der beiden Endwände (6d).

9. Modulare Stützvorrichtung (1) nach einem der Ansprüche 6 bis 8, **gekennzeichnet dadurch, dass** sie außerdem ein Höheneinstellungsmodul (4; 4') umfasst, das ein erstes Teil (4b; 19) umfasst, das mit dem Haltemodul für einen Lauf (3) verbunden ist, und ein zweites Teil (4a; 18), das mit dem Gewehrkolbenhaltemodul (2) verbunden ist, wobei das erste Teil (4b; 19) des Höheneinstellungsmoduls (4; 4'), auf bewegliche Art mit dem zweiten Teil (4a; 18) verbunden ist, um eine Verschiebung des Haltemoduls für einen Lauf (3) zu gestatten, um es an das Gewehrkolbenhaltemodul (2) anzunähern oder es von ihm zu entfernen, und so die Einstellung des Abstands zwischen dem Haltemodul für einen Lauf (2) und dem Gewehrkolbenhaltemodul (3) zu gestatten.

## Claims

1. A barrel holding module (3) for a firearm (A), formed by a body (8) intended to be connected to a fixed structure, such as an inner wall of a vehicle cab interior, the body (8) of the barrel holding module (3) comprising a housing (11) which is defined by two vertical side walls (11c) delimiting, at the lower part, a main opening (11a) and is able to receive the free end region of the barrel (C2) of a firearm (A), both vertical edges at one end of both vertical side walls (11c) of the housing (11) delimiting an inlet/outlet opening (11b) allowing to enter the free end region of a firearm barrel (C2) into the housing (11) and exit it therefrom, the barrel holding module (3) comprising an anti-projection mechanism (12) having a stop element (13a) movable between a blocking position, in which it extends across the housing (11) so as to form an abutment obstructing the removal of the barrel (C2) through the inlet/outlet opening (11b), and a release position in which it has been moved away from the main opening (11a) of the housing (11) so as to no longer obstruct the removal of the barrel (C2),
the barrel holding module (3) being **characterised in that** the anti-projection mechanism (12) further comprises an operating element (13b) operable to move the stop element (13a) from the blocking position to the release position, and **in that** the housing (11) is formed by a body (8) comprising an upper wall (8b), a lower wall (8a) opposite the upper wall (8b), and at least two outer side walls (8c) connecting the upper (8b) and lower (8a) walls and delimiting the periphery of the body (8), onto which periphery the housing (11) opens, at the inlet/outlet opening (11b), the housing (11) having a groove shape delimited by both vertical side walls (11c), an end wall (11d) opposite the inlet/outlet opening (11b), and a bottom wall (11e) connecting both vertical side walls (11c) and the end wall (11d).

2. The barrel holding module (3) according to claim 1, **characterised in that** the distance between both vertical side walls (11c) of the housing (11) decreases as the inlet/outlet opening (11b) is further away, both vertical side walls (11c) each being, for instance, composed of a first sloping region (11f) which starts from the inlet/outlet opening (11b), a first planar region (11g) which starts from the first sloping region (11f), faces the first planar region (11g) of the other vertical side wall (11c) and is at a constant distance therefrom, a second sloping region (11h) which starts from the first planar region (11g), and a second planar region (11i) which starts from the second sloping region (11h), faces the second planar region (11i) of the other vertical side wall (11c) and is at a constant distance therefrom.

3. The barrel holding module (3) according to one of claims 1 and 2, **characterised in that** the operating element (13b) has a vertical or sloped contact face extending across the housing (11) and with which the barrel (C2) of the firearm (A) comes into contact when it is inserted into the housing (11), the operating element (13b) being movable as a result of said contact of the barrel (C2) against the contact face and arranged such that this movement of the operating element (13b), under the action of the barrel (C2), moves the stop element (13a) from the blocking position to the release position.

4. The barrel holding module (3) according to one of claims 1-3, **characterised in that** the stop element (13a) and the operating element (13b) are integral with each other and take the form of a trigger (13) pivotally mounted around a pivot axis perpendicular to the side walls (11c) of the housing (11), the stop element (13a) consisting in a notch (13c) provided in the region of a first end of the trigger (13), the rest of the trigger (13) forming the operating element (13b) with the second end region of the trigger (13) extending out of the housing (11), such that pressing on the second end towards the main opening (11a) of the housing (11) pivots the first end in the opposite direction.

5. The barrel holding module (3) according to one of claims 1-4, **characterised in that** the anti-projection mechanism (12) of the barrel holding module (3) comprises means (16) for elastically biasing the stop element (13a) towards the blocking position, means against which the operating element (13b) is able to move the stop element (13a) towards the release position, the elastic biasing means (16) consisting, for instance, in a leaf spring (16) bearing, if applicable, at one end thereof, on the body (8) of the module (3) and, at its other end, on the trigger (13).

6. A modular support device (1) for firearm (A) of the type comprising a buttstock (C1) and a barrel (C2), said device (1) comprises a buttstock holding module (2) and a barrel holding module (3) intended to be disposed one below the other, the buttstock holding module (2) being formed by a body (5) intended to be connected to a fixed structure, such as an inner wall of a vehicle cab interior, the body (5) of the buttstock holding module (2) comprising an upper wall (5b), a lower part (5a) opposite the upper wall (5b), and at least one side wall (5c) connecting the upper (5b) and lower (5a) walls and delimiting the periphery of the body (5), the body (5) of the buttstock holding module (2) comprising a housing (6) which opens onto the upper wall (5b) and is able to receive the free end region of the buttstock (C1) of the firearm (A), the modular support device (1) being **characterised in that**:
- the barrel holding module (3) is as defined in any of claims 1-5; and
- the housing (6) is oblong and defined by walls (6b, 6c, 6d) sloped towards the upper wall (5b) of the body (5) of the buttstock holding module (2).

7. The modular support device (1) according to claim 6, **characterized in that** the sloped walls (6b, 6c, 6d) of the housing (6) comprise two longitudinal walls (6b) opposite each other and connected at each end by an end wall (6d) connecting two side walls (6c) each starting from a respective longitudinal wall (6b) with forming an angle with the latter, both end walls (6d) being curved.

8. The modular support device (1) according to one of claims 6 and 7, **characterised in that** the sloped walls (6b, 6d) defining the housing (6) have, at different heights, buttstock support notches (7), each notch (7) of a sloped wall (6b, 6c) being at the same height as a notch (7) on another sloped wall (6b, 6c) with, preferably and if applicable, notches (7) along both longitudinal walls (6b) and both end walls (6d).

9. The modular support device (1) according to one of claims 6-8, **characterised in that** it further comprises a height setting module (4; 4') comprising a first part (4b; 19) integral with the barrel holding module (3) and a second part (4a; 18) integral with the buttstock holding module (2), the first part (4b; 19) of the height setting module (4; 4') being movably connected to the second part (4a; 18) so as to allow the barrel holding module (3) to be moved closer to the buttstock holding module (2) or away therefrom, thereby allowing to set the spacing distance between the barrel holding module (3) and the buttstock holding module (2).
